**Europäisches Patentamt**

**European Patent Office**

**Office européen des brevets**

(11) Veröffentlichungsnummer: **0 325 661 B1**

(12) **EUROPÄISCHE PATENTSCHRIFT**

(45) Veröffentlichungstag der Patentschrift: **23.12.92**

(51) Int. Cl.⁵: **H04L 27/38**

(21) Anmeldenummer: **88100983.1**

(22) Anmeldetag: **23.01.88**

(54) **Verfahren zum Gewinnen eines Steuersignals für die Phase eines lokalen Trägersignals.**

(43) Veröffentlichungstag der Anmeldung:
**02.08.89 Patentblatt  89/31**

(45) Bekanntmachung des Hinweises auf die
Patenterteilung:
**23.12.92 Patentblatt  92/52**

(84) Benannte Vertragsstaaten:
**DE FR GB IT NL SE**

(56) Entgegenhaltungen:
**US-A- 3 970 946**

**IEEE TRANSACTIONS ON COMMUNICA-
TIONS, Band COM-30, Nr. 10, Oktober 1982,
Seiten 2385-2390, IEEE, New York, US; Y.
MATSUO et al.: "Carrier recovery systems
for arbitrarily mapped APK signals"**

(73) Patentinhaber: **ANT Nachrichtentechnik GmbH
Gerberstrasse 33
W-7150 Backnang(DE)**

(72) Erfinder: **Hoffmann, Michael, Dr. rer. nat.
Zwischenäckerle 60
W-7150 Backnang(DE)**

**Beschreibung**

Die Erfindung geht aus von einem im Oberbegriff des Patentanspruchs 1 angegebenen Verfahren zum Gewinnen eines Signals, das die Phase eines lokalen Trägersignals derart steuert, daß das lokale Trägersignal und das Trägersignal eines amplituden- und/oder phasenumgetasteten Empfangssignals phasensynchron sind.

Ein derartiges Verfahren ist aus einem Aufsatz von M. Hoffmann "Carrier Recovery for m-QAM-Signals" in ECRR, S. 247-253, vde-verlag München, Nov. 1986 bekannt, um ein Steuersignal für einen spannungsgesteuerten Oszillator zu gewinnen, der zur Trägerrückgewinnung in einer Demodulatorschaltung für amplituden- und/oder phasenumgetastete QASK-Signale eingesetzt ist.

Der Erfindung liegt die Aufgabe zugrunde, ein Verfahren der eingangs genannten Art anzugeben, das eine sichere und schnelle Trägerregeneration im Empfänger für amplituden-und/oder phasenumgetastete Signale bei gleichzeitiger Minimierung von Phasenabweichungen der Signalkomponenten aus der Quadraturlage ermöglicht.

Erfindungsgemäß wird diese Aufgabe durch die Merkmale des Patentanspruchs 1 gelöst. Vorteilhafte Ausführungen der Erfindung gehen aus den Unteransprüchen hervor.

Das Verfahren erfüllt die Forderung nach einer raschen Phasensynchronisation des lokalen Oszillators im Empfänger auf die Phase des Empfangssignals, wobei es auch einer Fehlsynchronisation entgegenwirkt, die z.B. durch eine Phasenabweichung der Signalkomponenten eines empfangenen Signals aus ihrer Quadraturlage auftreten kann.

Anhand eines in der Zeichnung dargestellten Ausführungsbeispiels wird nun die Erfindung näher erläutert. Es zeigen:

Figur 1 ein Blockschaltbild eines QASK-Empfängers,

Figur 2 ein erstes Entscheidungsdiagramm eines 16 QAM-Systems,

Figur 3 ein zweites Entscheidungsdiagramm eines 16 QAM-Systems,

Figur 4 eine aus dem ersten Entscheidungsdiagramm hervorgehende Phasendetektorcharakteristik,

Figur 5 eine aus dem zweiten Entscheidungsdiagramm hervorgehende Phasendetektorcharakteristik,

Figur 6 ein gespreizter Ausschnitt der Phasendetektorcharakteristik nach Figur 4,

Figur 7 ein gespreizter Ausschnitt der Phasendetektorcharakteristik nach Figur 5,

Figur 8 ein aus dem ersten und zweiten Entscheidungsdiagramm hervorgegangenes drittes Entscheidungsdiagramm,

Figur 9 eine aus dem dritten Entscheidungsdiagramm hervorgehende Phasendetektorcharakteristik,

Figur 10 ein gespreizter Ausschnitt der Phasendetektorcharakteristik nach Figur 9 und

Figur 11 ein Blockschaltbild zur Ermittlung eines Phasenregelsignals.

Nachrichtentechnische Verfahren zur Informationsübertragung mittels amplituden- und/oder phasenumgetasteter Signale, abgekürzt auch QASK-Signale genannt, haben in den letzten Jahren zunehmend an Bedeutung gewonnen. QASK-Signale können bekanntlich folgendermaßen beschrieben werden:

$$u_1(t) = u_1 \sum_k g(t-kT) \cdot \left\{ a_k \cos(\omega t + \phi) + b_k \sin(\omega t + \phi) \right\}$$

$$(1)$$

Hierbei sind

$$u_N(t) = \cos(\omega t + \phi) \qquad (2)$$

die Normal- und

$$u_Q(t) = \sin(\omega t + \phi) \qquad (3)$$

die Quadraturkomponente des Signalträgers, und g(t) ist eine Funktion, welche folgende Bedingung erfüllt:

$$g(t) = \begin{cases} 1 & \text{für } t = 0 \\ 0 & \text{für } t = nT, \ n \text{ ganzzahlig}, \ n \neq 0 \end{cases} \quad (4)$$

Die Wertepaare $(a_k, b_k)$ beinhalten die zeit- und wertediskrete zu übertragende Information zu den Zeitpunkten $t = kT$ (T: Taktdauer). Bei vorgegebenem m-stufigen Übertragungsverfahren dürfen die Wertepaare nur m verschiedene Wertkombinationen annehmen. Von besonderer Bedeutung sind die m-stufigen Quadratur-Amplitudenmodulationsverfahren (QAM-Verfahren). Aus der Literatur sind noch weitere QASK-Modulationsverfahren bekannt. Die weiteren Ausführungen treffen für alle QASK-Verfahren zu, werden aber anhand eines QAM-Verfahrens erläutert.

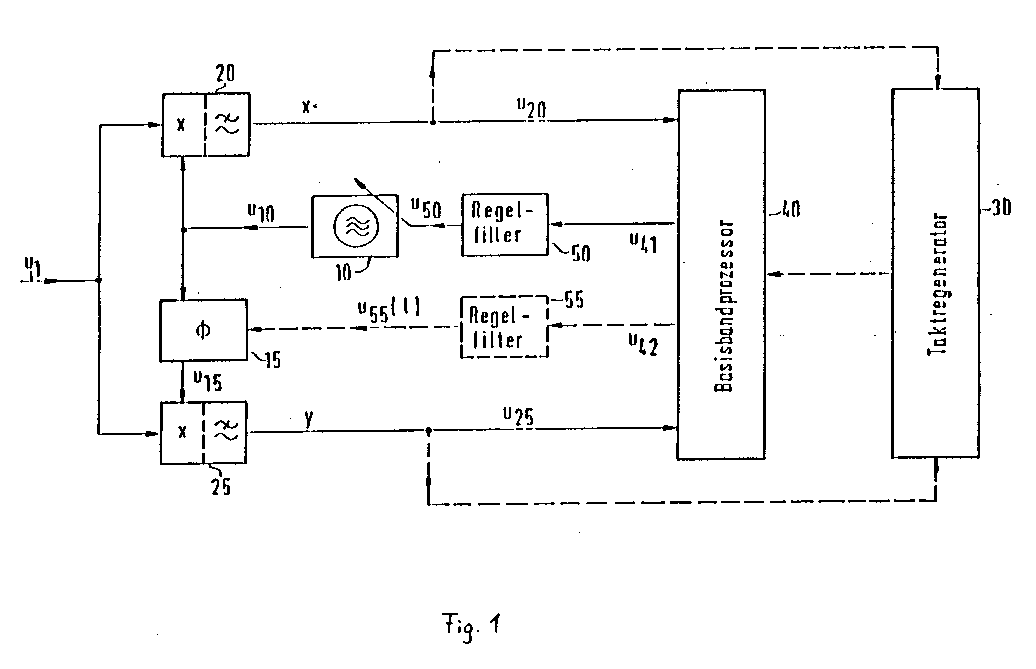

Das in Figur 1 gezeigte Blockschaltbild gibt das z.B. aus dem Aufsatz von M. Hoffmann "Carrier Recovery for m-QAM-Signals" in ECRR, S. 247-253, vde-verlag München, Nov. 1986 bekannte Schaltungsprinzip eines Quadraturempfängers wieder, welcher zur Demodulation von QASK-Signalen geeignet ist. Ein spannungsgesteuerter Oszillator (VCO) 10 hat die Aufgabe, ein zum Träger des Eingangssignals $u_1(t)$ in phasenstarrer Relation stehendes Signal:

$$u_{10}(t) = \hat{u}_{10} \cdot \cos(\omega t + \varnothing + \psi) \quad (5)$$

zu erzeugen.

Die Phase $\psi$ ist von dem aus einem Regelfilter 50 stammenden VCO-Steuersignal abhängig. Ein Phasenschieber 15 bildet aus dem Signal $u_{10}(t)$ das dazu um 90° verschobene Signal

$$u_{15}(t) = \hat{u}_{10} \cdot \sin(\omega t + \varnothing + \psi). \quad (6)$$

Die Abwärtsmischer 20 bzw. 25 erzeugen aus dem Eingangssignal $u_1(t)$ und den Signalen $u_{10}(t)$ bzw. $u_{15}(t)$ die Signale

$$u_{20}(t) = A \sum_k g(t-kT) \cdot \left\{ a_k \cos(\psi) - b_k \sin(\psi) \right\} \quad (7)$$

$$u_{25}(t) = A \sum_k g(t-kT) \cdot \left\{ a_k \sin(\psi) + b_k \cos(\psi) \right\}. \quad (8)$$

Die in $u_{20}(t)$ und $u_{25}(t)$ enthaltene Information über die Taktfrequenz $1/T$ und ihre Phasenlage kann in einem Taktregenerator 30 ausgenutzt werden, um ein Taktsignal phasenrichtig zu regenerieren. Eine Ausführung eines Taktregenerators geht z.B. aus einem Aufsatz von Le-Ngoc, Tho; Feher, Kamilo: 'A Digital Approach to Symbol Timing Recovery Systems' in IEEE Trans. Com., vol. COM-28, no. 12, Dec. 1980, pp. 1993-1999 hervor.

Das regenerierte Taktsignal benutzt man, um die Signale $u_{20}(t)$ und $u_{25}(t)$ in den Zeitpunkten $t = kT$ abzutasten. Diese Aufgabe wird neben anderen in einem sogenannten Basisbandprozessor 40, der auch als Phasendetektor bezeichnet werden kann, ausgeführt. Es gilt für die beiden in Quadratur zueinanderstehenden Signalkomponenten:

$$x := u_{20}(kT) = A \cdot \{a_k \cos(\psi) - b_k \sin(\psi)\} \quad (9)$$
$$y := u_{25}(kT) = A \cdot \{a_k \sin(\psi) + b_k \cos(\psi)\}. \quad (10)$$

Für $\psi = 0$ geben die beiden Signalkomponenten x und y die demodulierte Information $a_k, b_k$ wieder. Eine wesentliche Aufgabe der Demodulatorschaltung ist somit die Regelung der Phase auf $\psi = 0$. Da bei $\psi = 0$ das lokal erzeugte Signal $u_{10}(t)$ bis auf einen Amplitudenfaktor mit der einen Trägerkomponente des

Eingangssignals $u_1(t)$ identisch ist, ist $u_{10}(t)$ das lokal regenerierte Trägersignal.

Das Ausgangssignal $u_{41}(t)$ des unten noch detailliert beschriebenen Basisbandprozessors 40, welches eine Funktion der Phasendifferenz zwischen dem Träger des empfangenen Eingangssignals $u_1(t)$ und dem im spannungsgesteuerten Oszillator 10 erzeugten lokalen Trägersignal $u_{10}(t)$ ist, wird in der Schaltung gemäß Figur 1 in einem Regelfilter 50 gefiltert. Dessen Ausgangssignal $u_{50}(t)$ ist das Steuersignal für den spannungsgesteuerten Oszillator (VCO) 10.

Die Abwärtsmischer 20, 25 der Basisbandprozessor 40, das Regelfilter 50, der VCO 10 und der Phasenschieber 15 gemäß Figur 1 bilden die Regelschleife zur lokalen Regeneration des Trägers des Eingangssignals $u_1(t)$. Gleichzeitig bilden die Blöcke 20, 25, 10 und 15 den Quadraturempfänger.

Für eine korrekte Demodulation ist es wesentlich, daß sowohl die im Sender verwendeten Trägerkomponenten senkrecht aufeinander stehen, als auch daß die lokal regenerierten Trägerkomponenten $u_{10}(t)$ und $u_{15}(t)$ um 90° gegeneinander phasenverschoben sind. In der Praxis können jedoch kleine Abweichungen von der 90°-Phasendifferenz vorhanden sein. Dann gilt statt der Gleichungen (2), (3), (5) und (6):

$$u_N(t) = \cos(\omega t + \emptyset), \quad (11)$$
$$u_Q(t) = \sin(\omega t + \emptyset + \epsilon), \quad (12)$$
$$u_{10}(t) = u_{10} \cdot \cos(\omega t + \emptyset + \psi), \quad (13)$$
$$u_{15}(t) = u_{10} \cdot \sin(\omega t + \emptyset + \psi + \delta). \quad (14)$$

Dabei ist $\epsilon$ eine kleine Phasenabweichung der Senderträgerkomponenten aus der Quadraturlage und $\delta$ eine entsprechende Abweichung im Empfänger. Infolgedessen verändern sich die Signalkomponenten nach den Gleichungen (9) und (10) in

$$x = A \cdot \{a_k \cos(\psi) - b_k \sin(\psi - \epsilon)\} \quad (15)$$
$$y = A \cdot \{a_k \sin(\psi + \delta) + b_k \cos(\psi + \delta - \epsilon)\}. \quad (16)$$

Aus diesen Gleichungen folgt, daß für eine optimale Demodulation Maßnahmen zu ergreifen sind, die den Einfluß der Phasenabweichungen $\epsilon$ und $\delta$ ausgleichen. Neben der Trägerregenerationsschleife, welche die Phasendifferenz $\psi$ auf einen konstanten Wert ausgeregelt, bietet sich daher auch eine zweite Regelschleife zur Beeinflussung der Phasenabweichung $\delta$ an.

Zu diesem Zweck kann der Phasenschieber 15 in der Schaltung gemäß Figur 1 so aufgebaut werden, daß ein Feinabgleich der Phasenverschiebung über ein Steuersignal möglich wird. Die zusätzliche Regelinformation $u_{42}(t)$, die hierzu benötigt wird, kann ebenfalls im Basisbandprozessor 40 gewonnen werden.

In dem Blockschaltbild der Figur 1 wird das Regelsignal $u_{42}(t)$, das eine Funktion der Phasenabweichung $\delta$ ist und in ähnlicher Weise ermittelt wird wie das Signal $u_{41}(t)$, auf ein Regelfilter 55 geschaltet, dessen Ausgangssignal $u_{55}(t)$ auf den Steuereingang des Phasenschiebers 15 geführt wird.

Die Abwärtsmischer 20, 25, der Basisbandprozessor 40, das Regelfilter 55, der Lokaloszillator 10 und der Phasenschieber 15 bilden den Regelkreis zur Nachführung der Phasendifferenz $\delta$ auf einen konstanten Wert.

Die Ausgangssignale $u_{41}(t)$ bzw. $u_{42}(t)$ des Basisbandprozessors 40 sind, wie oben dargelegt, Funktionen von Phasendifferenzen. Deshalb bezeichnet man diese Ausgangssignale auch als Phasendetektorfunktionen. In dem Aufsatz von A. Leclert und P. Vandamme: 'Universal Carrier Recovery Loop for QASK and PSK Signal Sets' in IEEE Transactions on Communications, Vo. COM-31, No. 1, Jan. 1983, S. 130-136 und in dem Aufsatz von M. Hoffmann 'Carrier Recovery for m-QAM-Signals' in ECRR, S. 247-253, vde-verlag München, Nov. 1986 sind einige Phasendetektorfunktionen beschrieben. Eine mögliche Phasendetektorfunktion ist beispielsweise

$$u_{41}(t) = -\text{sgn}(x - \hat{x}) \cdot \text{sign}(y), \quad (17)$$

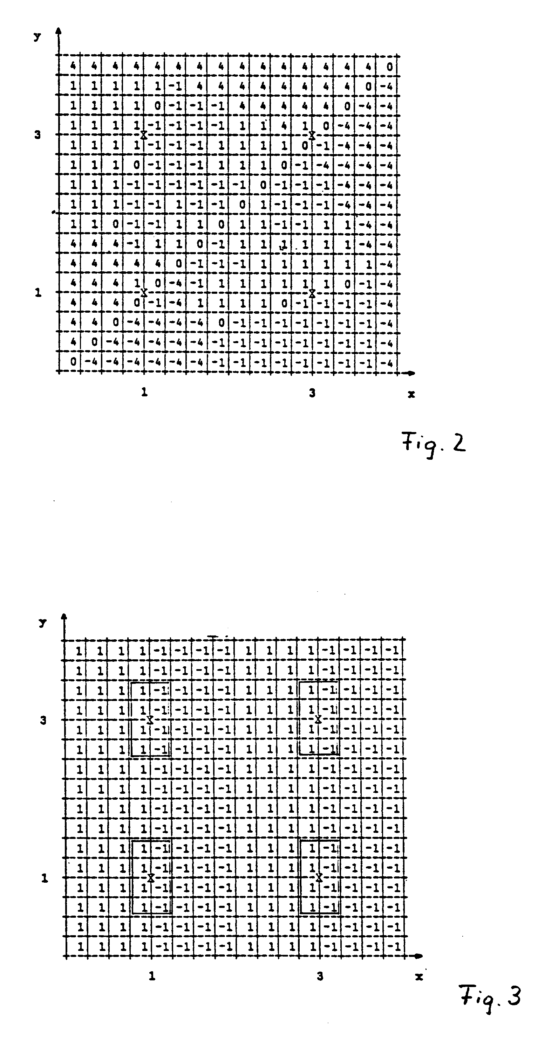

welche für eine digitale Signalverarbeitung leicht zugänglich ist. Dabei sind x und y die in den Gleichungen (15) und (16) von der Zeit und den Phasendifferenzen $\psi$, $\delta$ und $\epsilon$ abhängigen Signalkomponenten eines empfangenen Signalzustandes und sgn (...) ist die aus der Mathematik bekannte Signumsfunktion. Man kann sich die Signalkomponenten x und y als Projektionen auf die Koordinatenachsen einer Signalzustandsebene vorstellen, wobei die Koordinatenachsen die gesamte Signalzustandebene in vier Gebiete - Quadranten genannt - aufteilen. In den Figuren 2, 3 und 8 ist jeweils ein Quadrant einer Signalzustandsebene, in der die erlaubten Signalsollzustände mit Kreuzen (x) gekennzeichnet sind, dargestellt. Die Signalzustandsebene ist durch parallel zu beiden Koordinatenachsen verlaufende Entscheidungsschwellen in eine Vielzahl von Entscheidungsgebieten aufgeteilt. Das Gitter von Entscheidungsschwellen ist so gelegt, daß die Signalsollzustände auf Schnittpunkten von Entscheidungsschwellen liegen. Den einzelnen Entscheidungsgebieten sind, wie die Figuren 2, 3 und 8 zeigen, Zahlenwerte zugeordnet, die repräsentativ sind für die Phasenablage des jeweiligen Entscheidungsgebietes von dem ihm am nächsten liegenden Signalsollzustand. Der Zahlenwert eines jeden Entscheidungsgebietes geht aus einer Phasendetektorfunktion z.B. nach Gleichung (17) hervor. In dieser Gleichung (17) ist mit $\hat{x}$ die Signalkomponente $a_k$ bzw. $b_k$ desjenigen Signalsollzustandes angegeben, der dem empfangenen Signalzustand mit der Signalkomponente x am nächsten kommt.

In den Figuren 2 und 3 sind zwei Signalzustandsebenen für ein 16 QAM-System dargestellt, wobei die den Entscheidungsgebieten zugeordneten Zahlenwerte für jede Signalzustandsebene aus einer anderen Phasendetektorfunktion resultieren; die Zahlenwerte in Figur 3 wurden durch Anwendung von Gleichung (17) bestimmt. Die Zahlenwerte f(x, y) in den Entscheidungsgebieten der anderen drei Quadranten lassen sich aus den Zahlenwerten des einen in Figur 2, 3 dargestellten Quadranten durch folgende Bedingungen ableiten:

f(-x, y) = -f(x, y) und
f(x, -y) = -f(x, y).     (18)

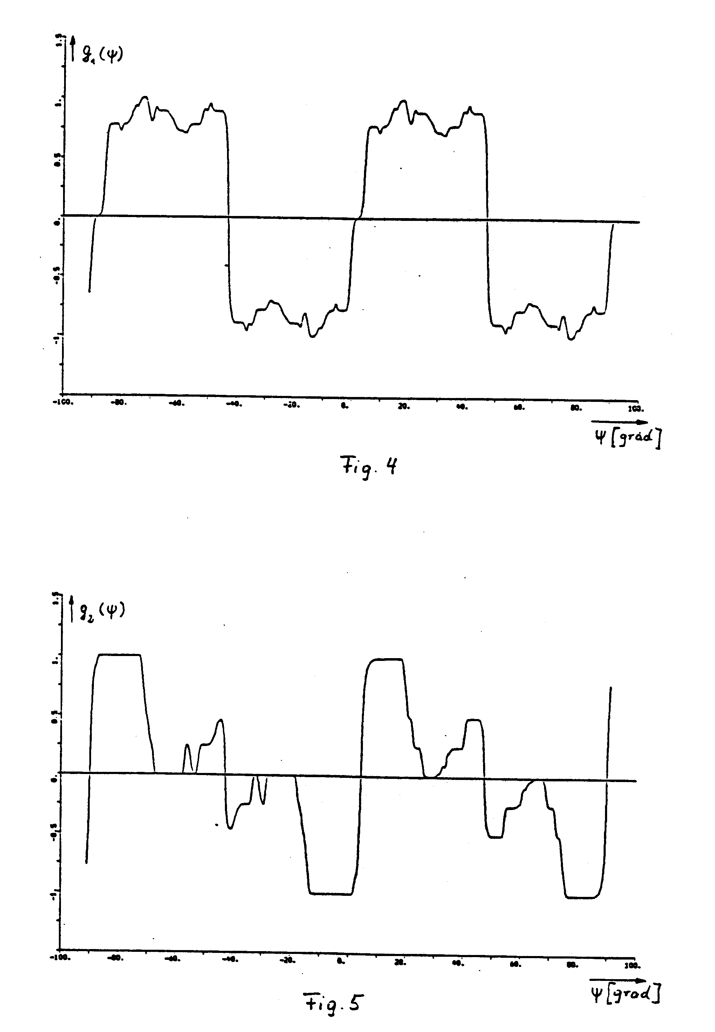

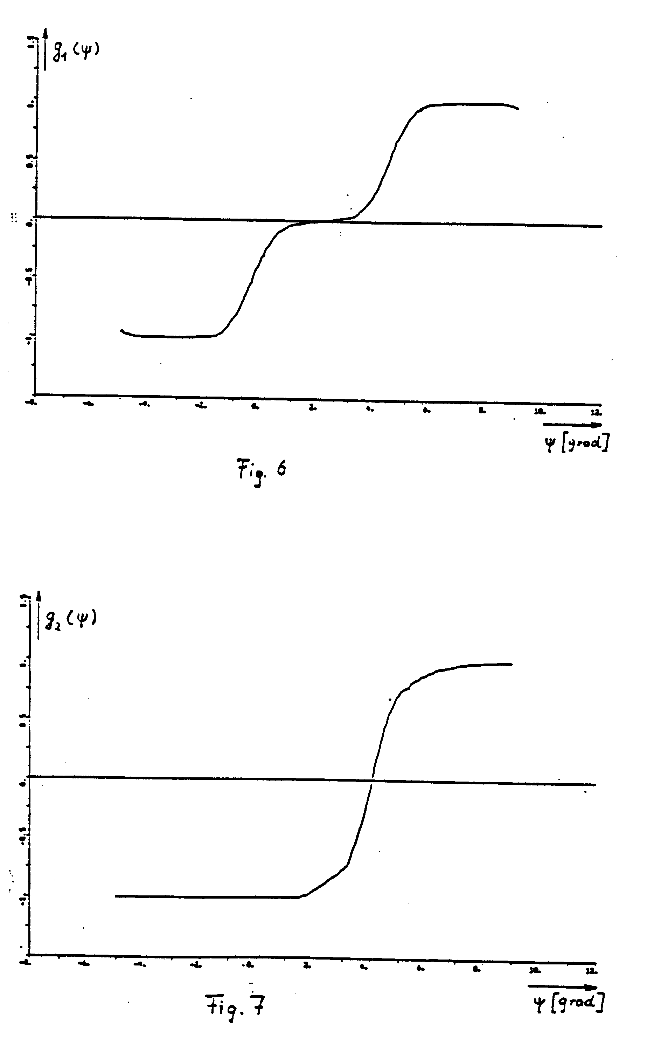

Das eigentliche Steuersignal für den spannungsgesteuerten Oszillator 10 wird durch Mittelung der zu mehreren empfangenen Signalzuständen bestimmten Zahlenwerte gebildet. Das Ergebnis g( $\psi$ ) der Mittelung ist von der in Gleichung (5) definierten Phase $\psi$ und von den in den Gleichungen (12) und (14) definierten Parametern $\epsilon$ und $\delta$ abhängig. Wenn eine solche Mittelung der Phasendetektorfunktion mit den aus Figur 2 hervorgehenden Zahlenwerten vorgenommen wird, erhält man die in Figur 4 dargestellte Phasendetektorcharakteristik $g_1$ ( $\psi$ ). Und die Mittelung der Phasendetektorfunktion mit den in Figur 3 angegebenen Zahlenwerten ergibt die in Figur 5 gezeigte Phasendetektorfunktion $g_2$( $\psi$ ). Dabei wurden die Paramter $\epsilon$ und $\delta$ wie folgt gewählt: $\epsilon = 4°$, $\delta = 0°$. Diese Werte wurden beispielhaft gewählt. In Realität können natürlich auch andere Werte auftreten. Es ist erkennbar, daß der Maximalwert der ersten Phasendetektorcharakteristik $g_1$ ( $\psi$ ) gleich dem Maximalwert der zweiten Phasendetektorcharakteristik $g_2$( $\psi$ ) ist und daß das quadratische Mittel der ersten Phasendetektorcharakteristik $g_1$( $\psi$ ) größer ist als das der zweiten Phasendetektorcharakteristik $g_2$( $\psi$ ). Mit anderen Worten, das Signal $g_1$( $\psi$ ) ist im Mittel energiereicher als das Signal $g_2$( $\psi$ ); d.h. daß ein Steuersignal $g_1$( $\psi$ ) den spannungsgesteuerten Oszillator schneller auf die Phase des Empfangssignals synchronisiert als ein Steuersignal $g_2$( $\psi$ ).

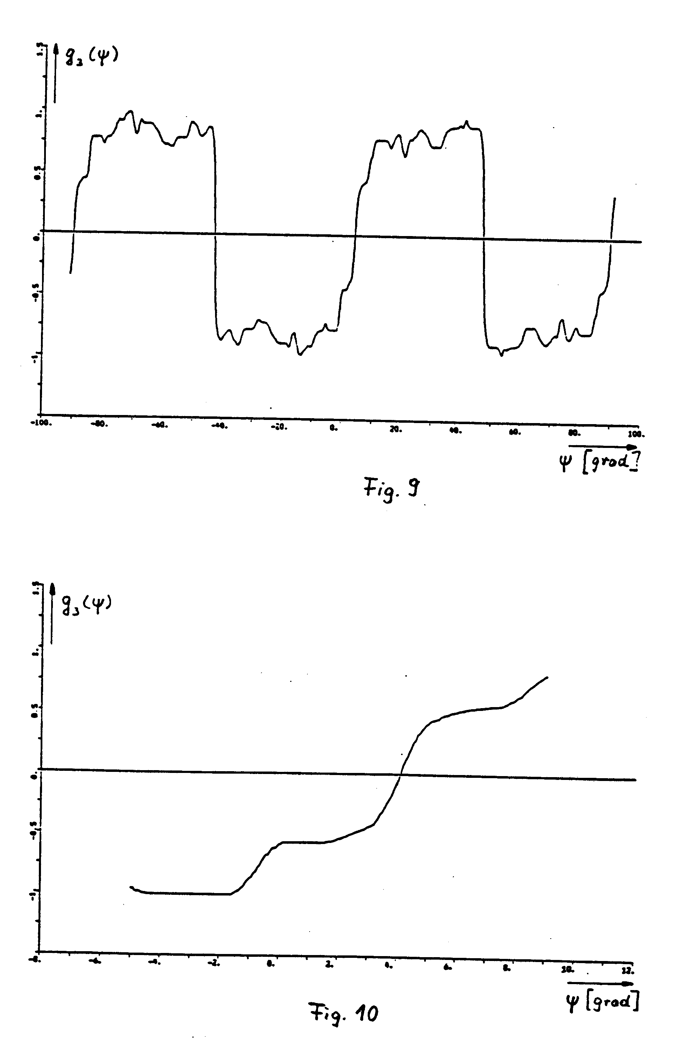

In der Figur 6 ist der Abschnitt um den Synchronisationspunkt der ersten Phasendetektorfunktion $g_1$( $\psi$ ) und in der Figur 7 der Abschnitt um den Synchronisationspunkt der zweiten Phasendetektorcharakteristik $g_2$( $\psi$ ) gespreizt dargestellt. Es zeigt sich dort, daß die erste Phasendetektorcharakteristik $g_1$( $\psi$ ) einen sehr flachen Verlauf im Nulldurchgang hat und außerdem findet der Nulldurchgang bei einer Phasendifferenz $\psi$ statt, die nicht gleich der Phasenabweichung $\epsilon$ der ausgesendeten Signalkomponente aus ihrer Quadraturlage ist. Eine Regelschleife mit dieser Phasendetektorcharakteristik regelt daher $\psi$ auf einen von $\epsilon$ verschiedenen Wert aus.

Diese Eigenschaft hat zur Folge, daß, wie den Gleichungen (15) und (16) zu entnehmen ist, bei $\psi \neq \epsilon$ der QASK-Empfänger nicht die gewünschten ausgesendeten Signalkomponenten $a_k$ und $b_k$ liefert, sondern beide demodulierten Signalkomponenten x und y Anteile von beiden ausgesendeten Signalkomponenten $a_k$ und $b_k$ enthalten. Diesen Fehler kann man durch Anwendung der zweiten Phasendetektorcharakteristik $g_2$( $\psi$ ) umgehen. Denn diese Phasendetektorcharakteristik $g_2$( $\psi$ ) hat einen steilen Nulldurchgang exakt bei $\psi = \epsilon$. Ist dann außerdem noch die Bedingung $\delta = -\epsilon$ erfüllt, so gilt, wie gewollt, daß die eine demodulierte Signalkomponente x nur mit der ausgesendeten Signalkomponente $a_k$ und die andere demodulierte Signalkomponente y nur mit der ausgesendeten Signalkomponente $b_k$ verknüpft ist.

Die beiden dargelegten und in den Figuren 4, 6 und 5, 7 gezeigten Phasendetektorcharakteristiken, von denen jede ihren eigenen beschriebenen Vorteil hat für die Trägerregeneration, gewinnt man auf folgende Weise:

Die den Entscheidungsgebieten aller vier Quadranten der Signalzustandsebene zugeordneten Zahlenwerte f(x, y) müssen die Bedingungen der Gleichung (18) erfüllen. Und zwar müssen diese Bedingungen für beide Phasendetektorcharakteristiken erfüllt werden.

Zusätzlich muß für die erste, eine schnellere Synchronisation gewährende Phasendetektorcharakteristik die Bedingung erfüllt sein, daß für die Zahlenwerte f(x, y) der einzelnen Entscheidungsgebiete gilt

f(x, y) = -f(sign(x) $^\bullet$ |y|, sign(y) $^\bullet$|x|)     (19)

(vgl. Figur 2). Als die Synchronisationsgeschwindigkeit noch unterstützend wirkt sich aus, wenn die absoluten Zahlenwerte für solche Entscheidungsgebiete am größten gewählt werden, welche in der Umgebung von Signalsollzuständen liegen, die zu benachbarten Signalsollzuständen gleicher Amplituden die größten Phasenabstände aufweisen.

Für die zweite, einen günstigeren Nulldurchgang aufweisende Phasendetektorcharakteristik muß zusätzlich neben Gleichung (18) erfüllt sein, daß in der näheren Umgebung von Signalzuständen die Zahlenwerte von in Richtung einer der beiden Koordinatenachsen nebeneinander liegenden Entscheidungsgebieten entgegengesetzte Vorzeichen haben und die Zahlenwerte von in Richtung der anderen Koordinatenachse nebeneinander liegenden Entscheidungsgebieten gleiche Vorzeichen haben (vgl. Figur 3).

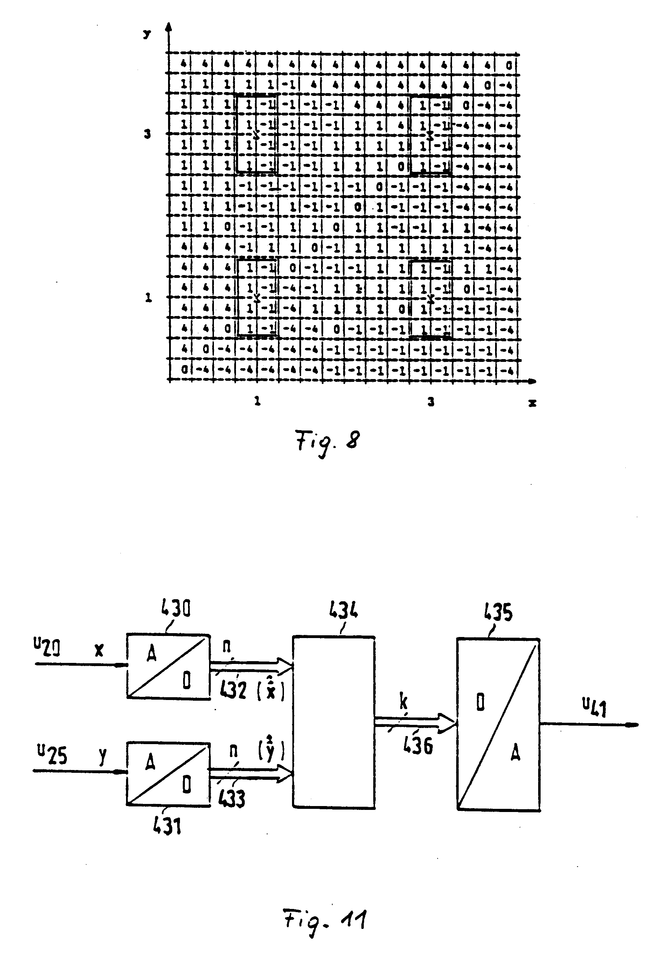

Um nun die Vorteile beider Phasendetektorcharakteristiken zu vereinen, wird eine neue dritte, in Figur 9 (gespreizte Darstellung in Figur 10) dargestellte Phasendetektrocharakteristik gebildet. Diese entsteht dadurch, daß, wie Figur 8 zeigt, für die Entscheidungsgebiete der Signalzustandsebene in der näheren Umgebung (s. umrandete Gebiete in Figur 3, 8) der Signalsollzustände die Zahlenwerte derjenigen Signalzustandsebene (s. Figur 3) übernommen werden, welche die Phasendetektorcharakteristik mit dem günstigeren Nulldurchgang hat. Für alle übrigen Entscheidungsgebiete werden die Zahlenwerte der anderen Signalzustandsebene (s. Figur 2) übernommen.

Jedem der Entscheidungsgebiete der Signalzustandsebenen wird ein Speicherplatz eines Speichers zugeordnet, in den der zu dem jeweiligen Entscheidungsgebiet gehörende Zahlenwert eingeschrieben wird. Am zweckmäßigsten wird so vorgegangen, daß zunächst ein erster Speicher mit den Zahlenwerten, die eine schnellere Synchronisation gewährleistende Phasendetektorcharakteristik ergeben, gefüllt wird und daß in einen zweiten Speicher die Zahlenwerte eingeschrieben werden, die eine Phasendetektorcharakteristik mit günstigem Nulldurchgang ergeben. Dann werden aus dem zweiten Speicher die Zahlenwerte aus den Entscheidungsgebieten in den Umgebungen von Sollsignalzuständen in entsprechende Speicherzellen eines dritten Speichers übernommen und die übrigen Speicherzellen dieses dritten Speichers werden mit den Zahlenwerten aus dem ersten Speicher gefüllt.

Die Figur 11 zeigt nun ein Blockschaltbild eines Basisbanddetektors (40 in Figur 1) mit einem Speicher 434, der dem besagten dritten Speicher entspricht. Gemäß diesem Blockschaltbild werden die Signalkomponenten $u_{20}$ und $u_{25}$ (vgl. Figur 1) mittels zweier Analog-Digital-Umsetzer 430 und 431 quantisiert und codiert, so daß an deren Ausgängen 432 und 433 n-bit-Worte $\hat{x}$ und $\hat{y}$ vorliegen. Die Schwellen der Analog-Digital-Umsetzer 430 und 431 entsprechen den die Entscheidungsgebiete in der Signalzustandsebene abgrenzenden Entscheidungsschwellen. Beide n-bit-Worte $\hat{x}$ und $\hat{y}$ stellen zusammen diejenige Adresse im Speicher 434 dar, wo der k-bi-codierte Zahlenwert zu dem Entscheidungsgebiet vorliegt, in das der Signalzustand mit den Signalkomponenten x und y hineinfällt. Der k-bit-codierte Zahlenwert wird aus dem Speicher 434 herausgegeben und über die Leitung 436 einem Digital-Analog-Umsetzer 435 zugeführt, der daraus den analogen Zahlenwert, d.h. die Phasendetektorfunktion $u_{41}$, bildet. Wie bereits oben beschrieben, wird durch Mittelung der Phasendetektorfunktion $u_{41}$ über mehrere Signalzustände das Steuersignal $u_{50}$ für den spannungsgesteuerten Oszillator 10 erzeugt. Die Mittelung geschieht durch das Regelfilter 50.

Ein Vorteil der in Figur 11 dargestellten Schaltung liegt darin, daß die Phasendetektorcharakteristik, die ja durch den Speicherinhalt festgelegt ist, leicht durch Austauschen des Speichers 434 oder seines Inhaltes abgeändert werden kann.

## Patentansprüche

1. Verfahren zum Gewinnen eines Signals, das die Phase eines lokalen Trägersignals derart steuert, daß das lokale Trägersignal und das Trägersignal eines amplituden-und/oder phasenumgetasteten Empfangssignals phasensynchron sind, indem zunächst das lokale Trägersignal in zwei zumindest annähernd senkrecht zueinander orientierte lokale Trägersignalkomponenten ($u_{10}$, $u_{15}$) zerlegt wird, welche als Koordinatenachsen einer von ihnen aufgespannten, in vier Gebiete - im folgenden als Quadranten bezeichnet - aufgeteilte Signalzustandsebene anzusehen sind, dann die beiden lokalen Trägersignalkomponenten ($u_{10}$, $u_{15}$) mit dem Empfangssignal ($u_1$) gemischt werden, wodurch zwei Signalkomponenten ($u_{20}$, $u_{25}$) entstehen, die Projektionen von empfangenen Signalzuständen auf die Koordinatenachsen der Signalzustandsebene darstellen, darauf jeder empfangene Signalzustand demjenigen von mehreren in einem Speicher vorhandenen Speicherplätzen zugeordnet wird, welcher demjenigen von mehreren Entscheidungsgebieten, in die die Signalzustandsebene durch parallel zu den beiden Koordinatenachsen verlaufende Entscheidungsschwellen aufgeteilt ist, zugeordnet ist, in das der empfangene Signalzustand hineinfällt, wobei in den den einzelnen Entscheidungsgebieten entsprechenden Speicherplätzen Zahlenwerte eingeschrieben sind, die repräsentativ sind für die Phasenablagen der einzelnen Entscheidungsgebiete von den ihnen jeweils am nächsten liegenden, auf Schnittpunkten von Entscheidungsschwellen befindlichen Orten in der Signalzustandsebene, welche die Lage erlaubter Signalsollzustände angeben, und indem schließlich durch Mittelung der zu mehreren empfangenen Signalzuständen bestimmten Zahlenwerte aus dem Speicher das Steuersignal für die Phase des lokalen Trägersignals gebildet wird, dadurch gekennzeichnet, daß die den einzelnen Entscheidungsgebieten in allen vier Quadranten der Signalzustandsebene zugeordneten und in den entsprechenden Speicherplätzen eingeschriebenen Zahlenwerte f(x, y) so gewählt sind, daß

$$f(-x, y) \; = \; - \, f(x,y) \; und$$
$$f(x, -y) \; = \; -f(x,y)$$

gilt,

wobei mit x und y die Lagekoordinaten der Entscheidungsgebiete innerhalb der Signalzustandsebene bezeichnet sind, daß den in der näheren Umgebung der Signalsollzustände liegenden Entscheidungsgebieten solche Zahlenwerte zugeordnet sind, daß die Zahlenwerte von in Richtung einer der beiden Koordinatenachsen nebeneinander liegenden Entscheidungsgebieten entgegengesetzte Vorzeichen haben und die Zahlenwerte von in Richtung der anderen Koordinatenachse nebeneinander liegenden Entscheidungsgebieten gleiche Vorzeichen haben und daß allen anderen Entscheidungsgebieten innerhalb eines jeden Quadranten solche Zahlenwerte f(x, y) zugeordnet sind, für die

$$f(x, y) \; = \; - \, f(sign(x) \; ^\bullet \; |y|, \; sign(y) \; ^\bullet \; |x|)$$

gilt.

2. Verfahren nach Anspruch 1, dadurch gekennzeichnet, daß in die Speicherplätze eines ersten Speichers für die Entscheidungsgebiete der gesamten Signalzustandsebene Zahlenwerte f(x, y) eingeschrieben werden, für die die folgenden Bedingungen gelten:

$$f(-x, y) \; = \; - \, f(x, y),$$
$$f(x, -y) \; = \; - \, f(x, y) \; und$$
$$f(x, y) \; = \; - \, f(sign(x) \; ^\bullet \; |y|, \; sign(y) \; ^\bullet \; |x|),$$

daß in die Speicherplätze eines zweiten Speichers für die Entscheidungsgebiete der gesamten Signalzustandsebene Zahlenwerte f(x, y) eingeschrieben werden, für die die folgende Bedingungen gelten:

$$f(-x, y) \; = \; - \, f(x, y),$$
$$f(x, -y) \; = \; - \, f(x, y)$$

und für die außerdem gilt, daß die Zahlenwerte von in Richtung einer der beiden Koordinatenachsen nebeneinander liegenden Entscheidugnsgebieten entgegengesetzte Vorzeichen haben und die Zahlenwerte von in Richtung der anderen Koordinatenachse nebeneinander liegenden Entscheidungsgebieten gleiche Vorzeichen haben, und daß in die Speicherplätze eines dritten Speichers, welche den Entscheidungsgebieten in der unmittelbaren Umgebung der Signalsollzustände zugeordnet sind, die Zahlenwerte dieser Entscheidungsgebiete aus dem zweiten Speicher übernommen werden und in die Speicherplätze des dritten Speichers, welche allen anderen Entscheidungsgebieten zugeordnet sind, die Zahlenwerte dieser Entscheidungsgebiete aus dem ersten Speicher übernommen werden.

3. Verfahren nach Anspruch 1 oder 2, dadurch gekennzeichnet, daß die absoluten Zahlenwerte für solche Entscheidungsgebiete am größten gewählt werden, welche in der Umgebung von Signalsollzuständen liegen, die zu benachbarten Signalsollzuständen gleicher Amplitude die größten Phasenabstände aufweisen.

4. Verfahren nach Anspruch 1, dadurch gekennzeichnet, daß die beiden Signalkomponenten eines jeweils empfangenen Signalzustandes parallel in Analog-Digital-Umsetzern (430, 431) quantisiert und codiert werden, daß jeweils aus den zwei zu einem jeden quantisierten empfangenen Signalzustand gehörenden codierten Signalkomponenten zusammen ein Codewort gebildet wird, das die Adresse desjenigen Speicherplatzes im Speicher (434) angibt, der den Zahlenwert des Entscheidungsgebietes enthält, in das der empfangene Signalzustand fällt, und daß der der Adresse zugeordnete codierte Zahlenwert aus dem Speicher (434) herausgelesen und einem Digital-Analog-Umsetzer (435) zugeführt wird.

**Claims**

1. A method of generating a signal which controls the phase of a local carrier signal in such a manner that the local carrier signal and the carrier signal of an amplitude and/or phase shift keyed received signal are synchronous in phase in that initially the local carrier signal is divided into two at least approximately mutually perpendicularly oriented local carrier signal components ($u_{10}$, $u_{15}$) which are to be considered as the coordinate axes of a signal state plane that is divided into four regions - hereinafter called quadrants -; whereupon the two local carrier signal components ($u_{10}$, $u_{15}$) are mixed with the received signal ($u_1$), thus producing two signal components ($u_{20}$, $u_{25}$) which represent projections of received signal states on the coordinate axes of the signal state plane; whereupon each received signal state is associated with that one of a plurality of memory locations that exist in a memory and are associated with that one of a plurality of quantised regions into which the signal state plane is divided by way of quantisation thresholds that extend parallel to the two coordinate axes and to which the received signal state belongs; with numerical values being stored in the memory locations corresponding to the individual quantised regions so as to be representative of the phase deviations of the individual quantised regions from locations in the signal state plane closest to said quantised regions and disposed on the points of intersection of quantisation thresholds in the signal state plane, said locations indicating the position of permitted signal states; and finally the averaging of the numerical values determined for a plurality of received signal states in said memory produces the control signal for the phase of the local carrier signal, **characterised in that** the numerical values f(x, y) associated with the individual quantised regions in all four quadrants of the signal state plane and stored in the respective memory locations are selected in such a manner that

f(-x, y) = -f(x, y) and
f(x, -y) = -f(x, y),

where x and y represent the position coordinates of the quantised regions within the signal state plane; the quantised regions disposed in the close vicinity of the permitted signal states have such associated numerical values that the numerical values of quantised regions lying next to one another in the direction of one of the two coordinate axes have opposite signs and the numerical values of quantisation regions lying next to one another in the direction of the other coordinate axis have the same signs; and all other quantised regions within each quadrant are associated with such numerical values f(x, y) for which

f(x, y) = -f(sign($\psi$) $\cdot$ |y|, sign($\psi$) $\cdot$ |x|).

2. A method according to claim 1, characterised in that numerical values f(x, y) for the quantised regions of the entire signal state plane and meeting the conditions

f(-x, y) = -f(x, y),
f(x, -y) = -f(x, y) and
f(x, y) = -f(sign(x) $\cdot$ |y|, sign($\psi$) $\cdot$ |x|

are written into the memory locations of a first memory; and numerical values for the quantised regions of the entire signal state plane and meeting the conditions

f(-x, y) = -f(x, y) and
f(x, -y) = -f(x, y)

are written into the memory locations of a second memory, said second memory values also meeting the condition that the numerical values of quantised regions lying next to one another in the direction of one of the two coordinate axes have opposite signs and the numerical values of quantised regions lying next to one another in the direction of the other coordinate axis have the same sign; and the memory locations of a third memory associated with the quantised regions in the immediate vicinity of the permitted signal states receive the numerical values of these quantised regions from the second memory and the memory locations of the third memory associated with all other quantised regions receive the numerical values of these quantised regions from the first memory.

3. A method according to claim 1 or 2, characterised in that the absolute numerical values are selected to be largest for those quantised regions which lie in the vicinity of permitted signal states that have the greatest phase distance from adjacent permitted signal states of the same amplitude.

4. A method according to claim 1, characterised in that the two signal components of each received signal state are quantised and coded in parallel in analog/digital converters (430, 431); a code word is formed from the two coded signal components belonging to each quantised received signal state, said code word indicating the address of the respective memory location in the memory (434) which contains the numerical value of the quantised region into which the received signal state falls and the coded numerical value associated with the address is read out of the memory (434) and fed to a digital/analog converter (435).

**Revendications**

1. Procédé d'obtention d'un signal commandant la phase d'un signal local de porteuse de manière que ce signal local de porteuse et le signal de porteuse d'un signal de réception modulé en amplitude et/ou en phase soient en synchronisme de phase, procédé dans lequel on décompose d'abord le signal local de porteuse en deux composantes ($u_{10}$, $u_{15}$) au moins approximativement perpendiculaires l'une à l'autre que l'on considère comme axes de coordonnées d'un plan d'état de signal qu'elles définissent et partagent en quatre domaines, ci-après appelés quadrants, puis on mélange ces deux composantes ($u_{10}$, $u_{15}$) de signal local de porteuse au signal de réception ($u_1$), ce dont il résulte la formation de deux composantes de signal ($u_{20}$, $u_{25}$) qui représentent des projections d'états de signal reçus sur les axes de coordonnées du plan d'état de signal, on attribue chaque état de signal reçu à un emplacement parmi plusieurs que comporte une mémoire, cet emplacement étant affecté à un domaine-de décision qui, parmi plusieurs en lesquels le plan d'état de signal est partagé par des seuils de décision s'étendant parallèlement aux deux axes de coordonnées, est celui dans lequel tombe l'état de signal reçu, les emplacements en mémoire correspondant aux domaines de décision individuels contenant des valeurs numériques qui, d'une part, sont représentatives du décalage de phase des domaines de décision individuels par rapport aux lieux qui, dans le plan d'état de signal, sont à chaque fois les plus proches d'eux et se trouvent aux points d'intersection de seuils de décision, et, d'autre part, indiquent la position d'états de consigne de signal permis, puis, par formation d'une moyenne des valeurs numériques mémorisées, destinées à plusieurs états de signal reçus, on forme le signal de commande pour commander la phase du signal local de porteuse, caractérisé par le fait que les valeurs numériques f(x, y) affectées aux domaines de décision individuels dans la totalité des quatre quadrants du plan d'état de signal et inscrites dans les emplacements de mémoire correspondants sont choisies de manière que les égalités

$$f(-x, y) = -f(x, y) \text{ et}$$
$$f(x, -y) = -f(x, y)$$

soient satisfaites, x et y désignant les coordonnées de position des domaines de décision à l'intérieur du plan d'état de signal, par le fait qu'on attribue de telles valeurs numériques aux domaines de décision situés aux proches alentours des états de consigne de signal, par le fait que les valeurs numériques de domaines de décision situés côte à côte sur la direction de l'un des deux axes de coordonnées ont des signes opposés et les valeurs numériques de domaines de décision situés côte à côte sur la direction de l'autre axe de coordonnées ont le même signe, et par le fait qu'à tous les autres domaines de décision à l'intérieur de chaque quadrant sont attribuées des valeurs numériques telles que la relation

$$f(x, y) = -f(\text{sign}(x) \cdot |y|, \text{sign}(y) \cdot |x|)$$

soit satisfaite.

2. Procédé selon revendication 1, caractérisé par le fait que l'on écrit, dans les emplacements de mémorisation d'une première mémoire pour les domaines de décision de l'ensemble du plan d'état de signal, des valeurs numériques f(x, y) qui satisfont aux conditions suivantes :

$$f(-x, y) = -f(x, y)$$

f(x, -y)  =  -f(x, y) et
f(x, y)  =  -f(sign(x) • |y|, sign(y) • |x|),

par le fait que l'on écrit, dans les emplacements de mémorisation d'une deuxième mémoire pour les domaines de de décision de l'ensemble du plan d'état de signal, des valeurs numériques f(x, y) qui satisfont aux conditions suivantes :

f(-x, y)  =  -f(x, y),
f(x, -y)  =  -f(x, y)

et qui sont en outre telles que les valeurs numériques de domaines de décision situés côte à côte sur la direction de l'un des deux axes de coordonnées aient des signes opposés et que les valeurs numériques de domaines de décision situés côte à côte sur la direction de l'autre axe de coordonnées aient le même signe, et par le fait que l'on introduit, dans les emplacements de mémorisation d'une troisième mémoire qui sont attribués aux domaines de décision dans les alentours immédiats des états de consigne de signal, les valeurs numériques de ces domaines de décision tirées de la deuxième mémoire, et l'on introduit, dans les emplacements de mémorisation de la troisième mémoire qui sont attribués à tous les autres domaines de décision, les valeurs numériques de ces domaines de décision tirées de la première mémoire.

3.  Procédé selon revendication 1 ou 2, caractérisé par le fait que l'on choisit les valeurs numériques absolues les plus grandes possibles pour les domaines de décision qui sont situés aux alentours d'états de consigne de signal qui présentent les plus grands intervalles de phase par rapport à des états de consigne de signal de même amplitude.

4.  Procédé selon revendication 1, caractérisé par le fait que l'on quantifie et code parallèlement dans des convertisseurs analogique/numérique (430, 431) les deux composantes de signal de chaque état de signal reçu, par le fait qu'à partir des deux composantes de signal codées, appartenant à chaque état de signal reçu et quantifié, on forme un mot de code indiquant l'adresse de celui des emplacements de mémorisation dans la mémoire (434) qui contient la valeur numérique du domaine de décision dans lequel tombe l'état de signal reçu, et par le fait que l'on lit dans la mémoire (434) la valeur numérique codée associée à l'adresse et on la transmet à un convertisseur numérique/analogique (435).

Fig. 1

| | | | | | | | | | | | | | | | |
|---|---|---|---|---|---|---|---|---|---|---|---|---|---|---|---|
| 4 | 4 | 4 | 4 | 4 | 4 | 4 | 4 | 4 | 4 | 4 | 4 | 4 | 4 | 4 | 0 |
| 1 | 1 | 1 | 1 | 1 | -1 | 4 | 4 | 4 | 4 | 4 | 4 | 4 | 4 | 0 | -4 |
| 1 | 1 | 1 | 1 | 0 | -1 | -1 | -1 | 4 | 4 | 4 | 4 | 4 | 0 | -4 | -4 |
| 1 | 1 | 1 | 1 | -1 | -1 | -1 | -1 | 1 | 1 | 4 | 1 | 0 | -4 | -4 | -4 |
| 1 | 1 | 1 | 1 | -1 | -1 | -1 | 1 | 1 | 1 | 1 | 0 | -1 | -4 | -4 | -4 |
| 1 | 1 | 1 | 0 | -1 | -1 | -1 | 1 | 1 | 1 | 0 | -1 | -4 | -4 | -4 | -4 |
| 1 | 1 | 1 | -1 | -1 | -1 | -1 | -1 | -1 | 0 | -1 | -1 | -1 | -4 | -4 | -4 |
| 1 | 1 | 1 | -1 | -1 | 1 | -1 | -1 | 0 | 1 | -1 | -1 | -1 | -4 | -4 | -4 |
| 1 | 1 | 0 | -1 | -1 | 1 | 1 | 0 | 1 | 1 | -1 | -1 | 1 | 1 | -4 | -4 |
| 4 | 4 | 4 | -1 | 1 | 1 | 0 | -1 | 1 | 1 | 1 | 1 | 1 | 1 | -4 | -4 |
| 4 | 4 | 4 | 4 | 4 | 0 | -1 | -1 | -1 | 1 | 1 | 1 | 1 | 1 | 1 | -4 |
| 4 | 4 | 4 | 1 | 0 | -4 | -1 | 1 | 1 | 1 | 1 | 1 | 1 | 0 | -1 | -4 |
| 4 | 4 | 4 | 0 | -1 | -4 | 1 | 1 | 1 | 1 | 0 | -1 | -1 | -1 | -1 | -4 |
| 4 | 4 | 0 | -4 | -4 | -4 | -4 | 0 | -1 | -1 | -1 | -1 | -1 | -1 | -1 | -4 |
| 4 | 0 | -4 | -4 | -4 | -4 | -4 | -1 | -1 | -1 | -1 | -1 | -1 | -1 | -1 | -4 |
| 0 | -4 | -4 | -4 | -4 | -4 | -4 | -1 | -1 | -1 | -1 | -1 | -1 | -1 | -1 | -4 |

Fig. 2

| | | | | | | | | | | | | | | | |
|---|---|---|---|---|---|---|---|---|---|---|---|---|---|---|---|
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |
| 1 | 1 | 1 | 1 | -1 | -1 | -1 | -1 | 1 | 1 | 1 | 1 | -1 | -1 | -1 | -1 |

Fig. 3

Fig. 4

Fig. 5

Fig. 6

Fig. 7

Fig. 9

Fig. 10

15

| 4 | 4 | 4 | 4 | 4 | 4 | 4 | 4 | 4 | 4 | 4 | 4 | 4 | 4 | 4 | 0 |
|---|---|---|---|---|---|---|---|---|---|---|---|---|---|---|---|
| 1 | 1 | 1 | 1 | 1 | -1 | 4 | 4 | 4 | 4 | 4 | 4 | 4 | 4 | 0 | -4 |
| 1 | 1 | 1 | 1 | -1 | -1 | -1 | -1 | 4 | 4 | 4 | 1 | -1 | 0 | -4 | -4 |
| 1 | 1 | 1 | 1 | -1 | -1 | -1 | -1 | 1 | 1 | 4 | 1 | -1 | -4 | -4 | -4 |
| 1 | 1 | 1 | 1 | -1 | -1 | -1 | 1 | 1 | 1 | 1 | 1 | -1 | -4 | -4 | -4 |
| 1 | 1 | 1 | 1 | -1 | -1 | -1 | 1 | 1 | 1 | 0 | 1 | -1 | -4 | -4 | -4 |
| 1 | 1 | 1 | -1 | -1 | -1 | -1 | -1 | -1 | 0 | -1 | -1 | -1 | -4 | -4 | -4 |
| 1 | 1 | 1 | -1 | -1 | -1 | -1 | -1 | 0 | 1 | -1 | -1 | -1 | -4 | -4 | -4 |
| 1 | 1 | 0 | -1 | -1 | 1 | 1 | 0 | 1 | 1 | -1 | -1 | 1 | 1 | -4 | -4 |
| 4 | 4 | 4 | -1 | 1 | 1 | 0 | -1 | 1 | 1 | 1 | 1 | 1 | 1 | -4 | -4 |
| 4 | 4 | 4 | 1 | -1 | 0 | -1 | -1 | -1 | 1 | 1 | 1 | -1 | 1 | 1 | -4 |
| 4 | 4 | 4 | 1 | -1 | -4 | -1 | 1 | 1 | 1 | 1 | 1 | -1 | 0 | -1 | -4 |
| 4 | 4 | 4 | 1 | -1 | -4 | 1 | 1 | 1 | 1 | 0 | 1 | -1 | -1 | -1 | -4 |
| 4 | 4 | 0 | 1 | -1 | -4 | -4 | 0 | -1 | -1 | 1 | 1 | -1 | -1 | -1 | -4 |
| 4 | 0 | -4 | -4 | -4 | -4 | -4 | -1 | -1 | -1 | -1 | -1 | -1 | -1 | -1 | -4 |
| 0 | -4 | -4 | -4 | -4 | -4 | -4 | -1 | -1 | -1 | -1 | -1 | -1 | -1 | -1 | -4 |

Fig. 8

Fig. 11